# EUROPEAN PATENT SPECIFICATION

(11) **EP 3 327 740 B1**
(45) Date of publication and mention of the grant of the patent: **24.12.2025**
(21) Application number: 18152852.2
(22) Date of filing: 22.01.2018
(51) Int. Cl.: H01H 3/26, H01H 3/40, H01H 19/18, F16H 25/20, H01H 13/52, H01H 3/16

(54) **DEVICE FOR LIMITING, AND DRIVE SYSTEM COMPRISING A DEVICE FOR LIMITING**
BEGRENZUNGSVORRICHTUNG UND ANTRIEBSSYSTEM MIT EINER BEGRENZUNGSVORRICHTUNG
DISPOSITIF DE LIMITATION ET SYSTÈME D'ENTRAÎNEMENT COMPRENANT UN DISPOSITIF DE LIMITATION

(30) Priority: 23.01.2017 NL 2018214
(43) Date of publication of application: 30.05.2018
(73) Proprietor: Ridder Beheer B.V., 3846 AX Harderwijk (NL)
(72) Inventor: van Staalduinen, Eduard Maria, 3846 AX Harderwijk (NL)
(74) Representative: Patent Business B.V.

(56) References cited:
- EP-A1- 1 153 185
- EP-A1- 3 106 598
- EP-B1- 1 153 185
- WO-A1-02/01588
- US-A- 3 474 317
- US-A- 5 299 678

## Description

### Field of the invention

The invention relates to a device for limiting, and to a drive system comprising a device for limiting.

### Background of the invention

US5299678 according to its abstract describes "an adjustable limit switch mechanism for controlling the operation of an electric motor of a garage door opener over a selected range of movement including a motor driven threaded shaft supporting at least one switch actuator which is adjustably positionable and restrained from rotary movement while being axially translated by rotation of the shaft. A limit switch is mounted adjacent the threaded shaft so as to be actuated as the switch actuator is translated axially on the shaft."

DE3003636 according to its abstract describes "a motor which has a gear mechanism for driving a coil shaft and at least one microswitch as end-position detector set from the outside. Each end-position detector has a second microswitch in parallel with it and acting as safety switch. A switching finger on the switching arms of both switches in any one pair moves when the coil shaft rotates. The two switches in each pair are staggered. The switching finger has an element for setting the directions of displacement. The element engages the switching arm of one of the two switches in each pair. The switching finger may have a nut travelling along a threaded spindle rotated by the coil shaft. The mechanism is used in venetian blinds.

WO0201588 according to its abstract describes "a device for limiting a movement of a member driven by a motor, comprising at least two switches connected to a circuit of the motor and movable actuating elements driven by the motor and co-acting with the switches, which actuating elements are movable substantially independently of each other. A normal end switch and an emergency end switch can hereby be actuated without the danger of unintentional actuation of the emergency switch. The actuating elements can be movable by a joint drive element connected to the motor and can be resiliently deformable. The actuating elements can form part of a single resiliently deformable actuating member and have a different thickness, and thereby a differing stiffness. The actuating member can herein be a leaf spring, which has an incision from an outer end which mutually separates the actuating elements."

### Summary of the invention

A disadvantage of prior art is that a known limiting device was found to allow a motor to run beyond its set limit. A further or additional disadvantage of a known limiting device is that it can be reset from a distance.

Hence, it is an aspect of the invention to provide a limiting device according to claim 1.

It is further provided a drive system according to claim 15.

Embodiments of the invention are set forth with the appended dependent claims.

It was found that a mere electronical indication of a limit often is not sufficient. An example of such an electronic indication, more in particular an electronic limiting provision, is a switch that provides an indication to a motor control system that a limit is reached or even passed. In an example of such an electronic limiting system, an electric circuit is broken and the motor is prevented from continuing beyond a set limit. It was found that in practise, often a system reset is given, and the drive system continues operating. In order to prevent such an operation, it was found that an additional mechanical blocking should provided that requires an operator to physically go to the drive system, and manually unlock the limiting system. The manual unlocking in this manner forces the operator to visually inspect the drive system.

The device for limiting a movement of a member driven by a motor comprises at least two switches connected to a circuit of the motor and movable actuating elements driven by the motor and co-acting with the switches. Such a limiting device is marketed by applicant under the name "end switching system", and is for instance used in drive systems for ventilating glasshouses.

In such an example application a precisely controlled climate must be maintained in glasshouses in order to ensure optimal conditions for growth of the products cultivated therein.

In addition, the cost of setting and maintaining such a climate must be minimal. The opening and closing of ventilating openings, such as windows, is therefore centrally controlled by a climate computer. This is also the case for the opening and closing of insulating energy screens arranged in the top of the glasshouse.

The climate computer herein actuates a drive system for the ventilation which consists of rack-pinion combinations which are connected to the windows and driven by shafts, which are connected in turn to drive motors, usually via a motor reductor. In addition, the computer actuates a drive system for the energy screens.

This drive system is formed by winding shafts, onto which the screens are wound or from which they are unwound, and which are likewise driven by motors, optionally via drive shafts and reductors.

When the windows and/or the energy screens reach an end position, and are therefore fully opened or closed, the drive system has to be switched off. For this purpose the motor reductors are provided with end switches. These switches are connected to an external relay which is arranged in the circuit of the motor.

In order to prevent damage to the drive system and/or the windows and/or energy screens driven thereby, the end switches in an embodiment take a dual form. In addition to the operation end switch, which during normal use stops the motor, and thereby also the whole drive, via its external relay, in such an embodiment there is also provided a safety end switch which is arranged a small distance from the operation end switch and likewise co-acts with an external relay. This safety relay ensures an interruption of the power supply to the motor, so that the driving will still come to a stop.

In an embodiment of the limiting device, the actuating elements are movable substantially independently of each other. A greater distance between the actuating elements can hereby be created, so that the safety end switch is not actuated unintentionally, even if the drive system "runs on" after the motor has been stopped.

A structurally simple embodiment of the limiting device is obtained when the actuating elements are movable by a joint drive element connected or coupled to the motor. In fact, the joint drive element can be coupled to the motor, coupled to for instance a transmission that is coupled to the motor, or even to both.

The movability of an actuating element can be achieved in simple manner by giving it a resiliently deformable form. In order to create sufficient distance between the moment of actuation of two end switches, actuating elements can be used that have a differing stiffness.

The limiting device further comprises a housing holding or housing said at least one switch, said at least one actuating element and said mechanical lock. In an embodiment, the housing comprising an access opening for providing access to a part of said mechanical lock for allowing unlocking.

In an embodiment the mechanical lock comprises a mechanical lock element provided for engaging actuating element for said locking. In a particular embodiment, the lock element snaps behind said at least one actuating element.

In an embodiment, the mechanical lock comprises a mechanical lock element fixed to the housing, in an embodiment co-formed with at least part of said housing.

In was found to provide a simple alignment for production, and at minimal costs.

In an embodiment, the at least one actuating element is movable by a joint drive element coupled to at least one selected from said motor and said member driven by said motor.

In an embodiment, the at least one actuating element is resiliently deformable, in particular said actuating element comprises a leaf spring. This provides a simple and secure element for actuating.

In an embodiment, the actuating element comprises a locking member and said mechanical lock comprises a mechanical lock element provided for snappingly engaging one another when said actuating element is at or past said at least one set limit position.

In an embodiment, the limiting device comprises at least two switches. In an embodiment thereof, the at least one actuating element is provided for operating said at least two switches. In a further embodiment, the switches and the actuating element are provided with respect to one another for allowing said actuating element to operate one switch after the other. Thus, various levels of control may be provided. In a particular embodiment, the actuating element and the switches are positioned to leave previously operated switches operated. In this respect, operating can relate to closing a switch, or to opening a switch. In this respect, a switch can for instance relate to a micro switch.

In an embodiment, the mechanical lock is provided for engaging said actuating element for mechanically locking said actuating element when or after a last one of said at least two switches is operated. Thus, the mechanical lock can be provided as a failsafe is the other, electronically operated means failed of are ignored.

In an embodiment, the actuating element extends in an extension direction, and said at least two switches are provided along said extension direction. In a particular embodiment, the at least two switches are provided at subsequent positions along said extension direction. Thus, an easy to realize sequence of events can be generated.

In an embodiment, when comprising said joint drive element, said joint drive element comprises a threaded spindle and at least one nut running on said threaded spindle. In an embodiment, the at least one nut comprises a travel cam and the limiting device further comprises a guiding rail for engaging said travel cam for allowing or urging said nut to travel in a longitudinal direction of said threaded spindle on said threaded spindle. The nut can for instance travel until an end of said guiding rail where said nut subsequently couples with said threaded spindle to co-rotates with said threaded spindle. In an embodiment, the nut comprises an operating cam for engaging said at least one actuating element when said nut co-rotates with said threaded spindle.

In an embodiment, a ring can be provided on the nut, and the ring can be provided with the cams. It should be clear that the ring is rotationally fixed onto the nut.

In an embodiment, the actuating element is positioned for being engaged by said operating cam when said nut is at an end of said threaded spindle. In a particular embodiment, said actuating element extends functionally parallel to said threaded spindle. A travel path of a nut thus directly relates to the amount of rotations of the motor.

In an embodiment, the at least one nut further comprises an adjustment part allowing it to be positioned at a start position on said threaded spindle. In an embodiment, the start position is at a distance from an end of said spindle.

In an embodiment, the limiting device comprises:
- at least two sets of said at least one switches, each set of switches functionally couplable to said motor;
- at least two of said movable actuating elements, driven by the member driven by the motor and each co-acting with a set of said switches, and
- at least two of said mechanical locks, each for engaging a said actuating element for mechanically locking its actuating element when it is at or past its set limit position, thus providing at least two set limit positions.

In an embodiment, each set of switches comprises at least two switches. In an embodiment thereof, each said at least one actuating element is provided for operating a set of switches, wherein said switches of a set of switches and said corresponding actuating element are provided with respect to one another for allowing said actuating element to operate one switch after the other of said set of switches. In an embodiment thereof, each previously operated switch is left operated.

Furthermore in an embodiment, each of said mechanical locks is provided for engaging a said actuating element for mechanically locking said actuating element when or after a last one of said at least two switches of said set of switches is operated. In an embodiment, said actuating element extends in an extension direction, and said at least two switches of said set of switches are provided along said extension direction. In an embodiment, said at least two switches of said set of switches are provided at subsequent positions along said extension direction. In an embodiment, first the switch physically closes to an end of the threaded spindle is operated, and subsequently the next switch until the switch most remote from that threaded spindle end.

The invention further pertains to a drive system comprising a motor, a transmission functionally coupled to said motor and a limiting device according to any one of the preceding claims, wherein said motor comprises an electric motor In an embodiment, the electric motor is a self-commutated AC or DC motor. The limiting device is in particular beneficial for an AC or DC that have mechanically commutated motor. In particular, the limiting device is used for an AC electric motor with mechanical commutator. Such an electric motor with a rotor and a stator is simple in construction, and using the limiting device can be provided with a simple, failsafe and cost effective control.

An example useful to understand the invention is a device for limiting a movement of a member driven by a motor, comprising at least one switch functionally couplable to the motor, at least one movable actuating element, driven by one selected of the member driven by the motor and the motor and a combination thereof and co-acting with the at least one switch, and a mechanical lock for engaging said actuating element for mechanically locking said actuating element when it is at or past at least one set limit position.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. In the device or apparatus claims enumerating several means, several of these means may be embodied by one and the same item of hardware. The mere fact that certain measures are recited in mutually different dependent claims does not indicate that a combination of these measures cannot be used to advantage.

### Brief description of the drawings

Embodiments of the invention will now be described, by way of example only, with reference to the accompanying schematic drawings in which corresponding reference symbols indicate corresponding parts, and in which:
Figure 1 is a partly cut-away perspective view of a drive system with a limiting device;
Figure 2 is top view of the limiting device of figure 1;
Figure 3 is a bottom view of figure 2, with a lower part of the housing removed;
Figure 4 shows a side view of the limiting device of the previous drawings, with the housing removed, and
Figures 5A-5F schematically depicts various working steps of the limiting device.

The drawings are not necessarily on scale.

### Description of preferred embodiments

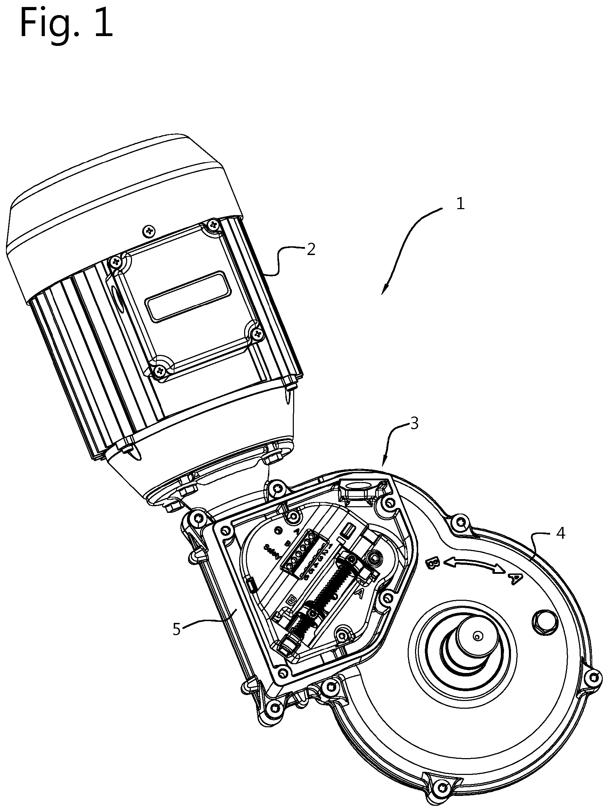

Figure 1 schematically depicts a drive system 1 (figure 1) comprises an electric motor 2, a reductor/transmission 4 and a limiting device 3 connected thereto. The reductor/transmission 4 here forms the member driven by the motor.

From reductor 4 the slowed rotational movement of motor 2 is transmitted to a shaft, which may comprise a pinion (not shown), which is connected in turn to drive shafts, drive rods or drive chains which transmit the movement to rack-pinion combinations for air windows or winding shafts for energy screens (all not shown).

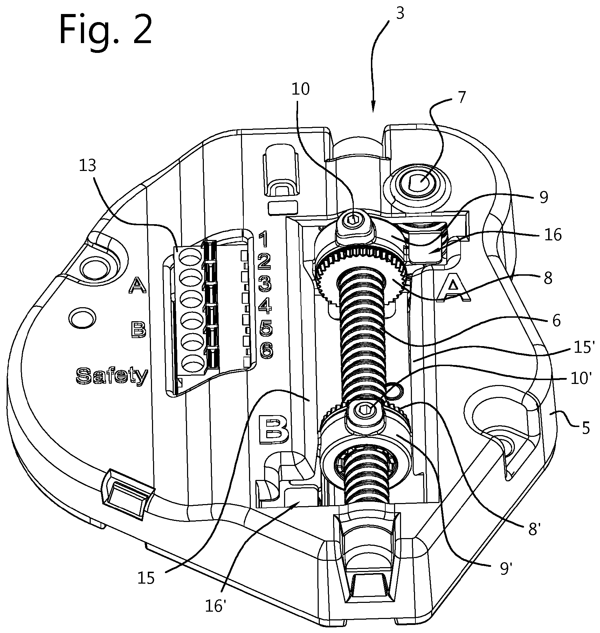

Limiting device 3 serves to stop motor 2 at one or more set limit positions when the windows and/or screens controlled or operated by drive system 1 have reached an extreme position, for instance their start and/or end positions. Limiting device 3 comprises a housing 5, here arranged on a casing of reductor 4. Further details of the limiting device 3 are explained with reference to figures 2-5.

In the example, the joint drive element comprises a threaded spindle 6 with nuts 8, 8'.

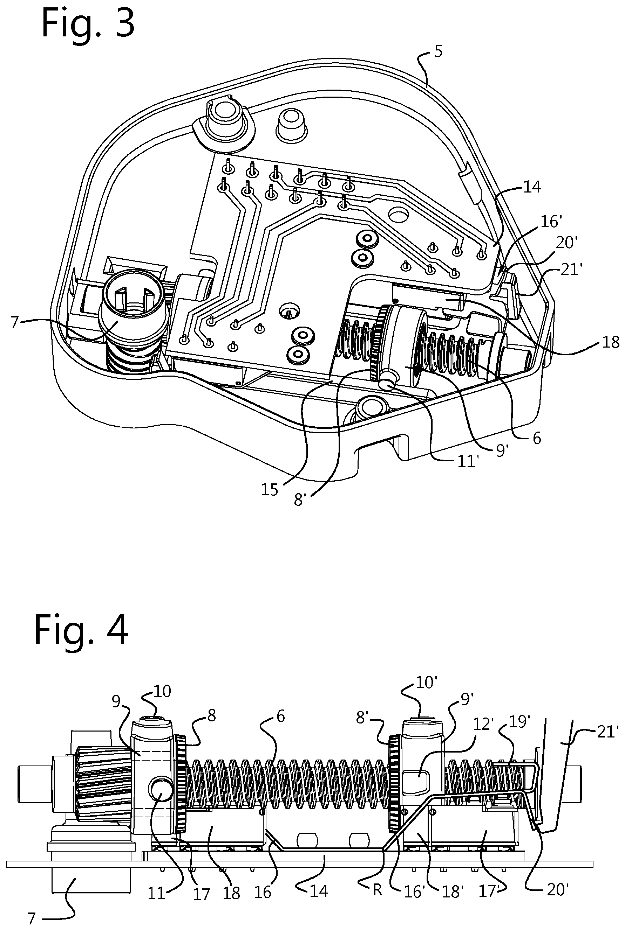

The threaded spindle 6 is mounted rotatably in housing 5. This threaded spindle 6 is here driven by reductor/transmission 4 via a gear transmission with a transmission shaft 7 (figures 3, 4) driving in turn the threaded spindle 6. The transmission shaft 7 is also rotatably held in housing 5

The currently discussed embodiment that is detailed in the drawings provides two limits. Identical parts (identical but mirrored) are indicated with an accent ' where they are visible. Thus, accented parts combine to one active element similar to the unaccented parts.

Reference is now made to figures 2-5. Arranged on threaded spindle 6 are in this embodiment two nuts 8, 8' which each define an extreme position of drive system 1. Usually, in the current embodiment these nuts 8, 8' are manually positioned on the threaded spindle 6.

Around each nut 8, 8' (on an extension indicated with dotted lines in figure 4) is provided a ring 9, 9' which is fixed to its nut 8, 8' by means of adjusting screws 10, 10'.

In the current embodiment, the limiting device has a connector 13 for connecting switches to for instance a control device for controlling the motor, or for instance directly to a power supply or a motor.

In figure 3 and 4, more details of the limiting device 3 can be seen and will be explained.

The limiting device 3 has in this embodiment a circuit board 14.

In this embodiment, in order for the nuts 9, 9' with the rings 10, 10' to displace when the threaded spindle 6 rotates, each ring 10, 10' is provided with at least one travel cam 11, 11', respectively. Preferably, two opposite travel cams are provided on each ring 10, 10'. Furthermore, a guiding rail 15 is provided functionally parallel to the threaded spindle 6. In operation, when the threaded spindle 6 rotates about its longitudinal axis, one the cams 11, 11' will engage a guiding rail 15 (see figure 3), and the respective nut 8, 8' with its ring 9, 9' will travel in longitudinal direction of the threaded spindle 6. In the current embodiment, both nuts and rings 8, 9 and 8', 9' will travel in the same direction.

The limiting device 3 in the current embodiment further comprises two sets of two switches 17, 18, 17', 18' that are provided on the circuit board 14. In an embodiment, switches 17, 17' are connected to an external relay (not shown here), whereby in normal operation the motor 2 is stopped when an end position is reached. Switch 18, 18' form an additional safety, and is only actuated if drive system 1 continues to run when this is not intended. This may be the result of a malfunction in one of the switches 17, 17' or the relay connected thereto, of an incorrect connection or of any other cause. The safety switches 18, 18' are likewise connected to a relay (not shown) which interrupts the power supply to motor 2.

Each of the switches 17, 18 and switches 17', 18' are functionally coupled with a respective movable actuating element 16, 16'. In the shown embodiment these actuating elements 16,16' take a resiliently deformable form. In particular, pieces of spring steel may be used, forming leaf springs. Here, the actuating elements 16, 16' extend functionally parallel to the threaded spindle 6. The actuating elements 16, 16' have ends that can move cross with respect to the threaded spindle 6. In particular, here an end is positioned at or near each end of the threaded spindle 6.

The leaf springs of the actuating elements 16, 16' extend functionally parallel to a longitudinal axis of the threaded spindle 6. One end of each of the leaf springs is fixed, the other, free end is positioned at or neat the ends of the threaded spindle 6. The leaf springs are in the current embodiment biased downward, towards switches 17, 17', 18, 18'. The (free) ends of the leaf springs is provided with an engagement hook 19, 19' for engaging an operating cam 12, 12' on the ring 9, 9'. Here, an end part of the actuating element 16, 16' is formed into the engagement hook 19, 19'.

Furthermore, another end part for the actuating element 16, 16' is formed into a locking end 20, 20' for engaging en locking with the mechanical lock, here comprising the locking hook 21, 21'.

The actuating element 16, 16' is formed in such a way that when the free end is manipulated, first the most remote (i.e., most closely to an end of the threaded spindle 6) switch is operated, and when the free end is manipulated further, the next switch is operated. In the current example, the leaf spring first releases switch 17, 17', and then releases switch 18, 18', leaving the earlier released switches released. In the current embodiment, the mechanical lock is activated after the last switch is operated.

In the current embodiment, the threaded spindle 6 is functionally coupled with the motor 2 or the reductor 4 via spindle drive 7. Usually, for easy setting, the limiting device 3 will be coupled to the reductor 4.

As explained, the rings 9, 9' are provided with travel cams 11, 11'. Here, for each ring 9, 9' one travel cam 11, 11' is depicted, but each ring can have opposite travel cams. The travel cams will engage the guiding rail 15, causing the nuts 8, 8' together with the rings 9, 9' to travel in longitudinal direction along a longitudinal axis of the threaded spindle 6. At or near the ends of the threaded spindle 6, the guiding rails 15 end. There, a respective nut 8, 8' with its attached ring 9, 9' will no longer travel in longitudinal direction. At that location, the limiting device 3 comprises a nut engagement provision for engaging the respective nut 8, 8' and forcing it to co-rotate with the threaded spindle 6. In a simple embodiment, at that position the thread of the threaded spindle 6 ends, thus forcing the nut 8, 8' to enter into co-rotation with the threaded spindle 6. When the ring 9, 9' starts to co-rotate with threaded spindle 6, the operating cam 12, 12' is also going to rotate and to operate the actuating element 16, 16'. Here, the operating cam 12, 12' engages the actuating element 16, 16'.

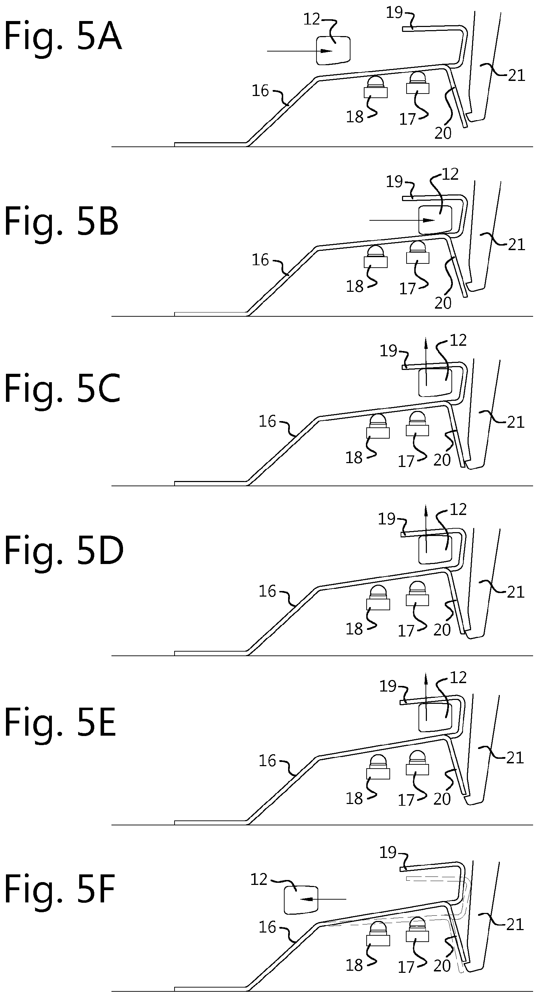

The operation of a limiting device can be as follows, with particular reference to drawings fig 5A-5F.

Before the drive system 1 is operational, an operator sets the longitudinal positions of the nuts 8, 8' and mounts the rings 9, 9' on the respective nuts 8, 8'.

When the motor 2 is running, the threaded spindle 6 is rotated, here by reductor/transmission 4.

Nuts 8, 8' herein perform a rectilinear movement along the longitudinal direction of the treaded spindle 6, because the travel cams 11, 11' are guided between the respective guiding rails 15. These guiding rails can for instance be co-formed with parts of the housing 5 of the limiting device 4. In figure 5A, the travelling of operating cam 12, 12' is indicated.

When one of the nuts 8, 8' arrives at the end of its guiding rail 15, the respective nut 8, 8' will also reach the end of the thread of the threaded spindle 6, or via another, similar provision, it begins to co-rotate with threaded spindle 6. In figure 5B, the moment just before that happens is indicated.

At the moment the nut 8, 8' co-rotates with the threaded spindle 6, the operating cam 12, 12' engages the actuating element 16, 16'. In the current embodiment, operating cam 12, 12' enters engagement hook 19. The engagement of the engagement hook 19 is indicated in figure 5C.

In the current embodiment, during its rotation the operating cam 12, 12' pulls or lifts the actuating element 16, 16' up, against its biasing force that here presses the actuating element onto both switches 17, 18. A start of this is indicated in figure 5C.

While pulling the actuating element 16, 16' up, first the most remote switch 17, 17' will be de-activated as indicated in figure 5C. When the motor 2 continues to run, the operating cam 12, 12' will rotate further and lifts the actuating element 16, 16' even further, releasing the second switch 18, 18'. This is indicated in figure 5D. In the current embodiment, this will cut the power to the motor 2.

Then, at the same time or shortly after, operating cam 12 will rotate even further. The locking end 20 of the actuating element 16, 16' will lock behind the locking hook 21. As indicated in figure 5E. In this embodiment, the locking end 20 locks behind locking hook 21 when the operating cam 12 lifts the actuating element 19 even further after the indication in figure 5D. In an alternative embodiment, the locking can also take place at the same time the second switch 18 gets released. In figure 5F, the operating cam 12 is freed from the engagement hook 19 of the actuating element 16. The actuating element 19, however, stays locked in its position and switches 17 and 18 remain free. This will keep the motor blocked, for instance. Actual physical action and inspection is needed to mechanically reset the limiting device.

Here in the current embodiment, an end of the lip 20 will lock with the cam on locking hook 21. It is evident that many similar engaging elements that can for instance flex with respect to one another are conceivable in order to perform the function of engaging and locking the actuating element 16, 16' in its set limit position. The actuating element 16, 16' is locked with respect to further motion of the ring 9, 9' and thus the threaded spindle and thus with respect to further motion of the motor 2.

Here in the current embodiment the switches 17, 18 are activated end become de-activated. It should be clear that that this could work reversed, having switches that become activated. In stead of switches, other elements can be used that provide the same functional signals.

A structurally simple, reliable and rapid action limiting device 4 is thus obtained with the embodiment of actuating elements 16, 16' presented above.

The invention is not limited to the shown embodiment, but can be varied in many ways. Using elements and parts performing similar functions. The actuating elements could thus for instance be pivotable instead of deformable. Forms of movement other than bending, for instance torsion, could also be envisaged. In the current embodiment, the actuating element is biased for actuating one or more switches 17, 17', 18, 18', and in the set end position these switches 17, 17', 18, 18' become de-activated. This may for instance be reversed. The current proposed limiting device may also be combined for instance with the delimiting device of the earlier application WO02/01588 referenced above. The separate actuating elements of that disclosure that each operate one switch can for instance each be provided with a mechanical lock.

In the current embodiment, the mechanical lock, or specifically at least one of the parts locking end 20 and/or locking hook 21 is physically accessible for a human operator through an opening in the housing. Using for instance a (specific) tool, the mechanical lock can be mechanically reset, i.e., both ends (locking end 20/locking hook 21) can be made to disengage. This forces visual inspection.

It will also be clear that the above description and drawings are included to illustrate some embodiments of the invention, and not to limit the scope of protection. Starting from this disclosure, many more embodiments will be evident to a skilled person. The invention is defined in the claims.

### Reference numbers

1 drive system
2 motor
3 limiting device
4 transmission/reductor
5 limiting device housing
6 treaded spindle
7 spindle drive
8 , 8' setting nut
9, 9' ring
10, 10' adjustment screw
11, 11' travel cam
12, 12' operating cam
13 connector
14 circuit board
15 guiding rail
16, 16' actuating element
17, 17' first (micro)switch
18, 18' second (micro)switch
19 engagement hook
20 locking end
21 locking hook

## Claims

1. A limiting device (3) for limiting a movement of a member driven by a motor (2), comprising:
- at least one switch (17, 17') functionally couplable to the motor (2);
- at least one movable actuating element (16, 16'), driven by the member driven by the motor (2) and co-acting with the at least one switch (17, 18, 17', 18'),
**characterized in that** said device further comprises:
- a mechanical lock (21) for engaging said at least one actuating element (16, 16') for mechanically locking said at least one actuating element (16, 16') when it is at or past at least one set limit position, said mechanical lock (21), once having engaged the actuating element (16, 16'), requires manual unlocking of the limiting device (3).

2. The limiting device (3) of claim 1, further comprising a housing (5) holding said at least one switch (17, 17'), said at least one actuating element (16, 16') and said mechanical lock (21), said housing (5) comprising an access opening for providing access to a part of said mechanical lock (21) for allowing manual unlocking.

3. The limiting device (3) of claim 1 or 2, wherein said mechanical lock (21) comprises a mechanical lock element (21) provided for engaging said at least one actuating element (16, 16') for said locking, in particular snapping behind said at least one actuating element (16, 16').

4. The limiting device (3) of claim 2, wherein said mechanical lock (21) comprises a mechanical lock element (21) fixed to said housing (5), in an embodiment co-formed with at least part of said housing (5).

5. The limiting device (3) of any one of the preceding claims, wherein the at least one actuating element (16, 16') is movable by a joint drive element (6, 9, 12) coupled to at least one selected from said motor (2) and said member driven by said motor.

6. The limiting device (3) of any one of the preceding claims, wherein the at least one actuating element (16, 16') is resiliently deformable, in particular said at least one actuating element (16, 16') comprises a leaf spring.

7. The limiting device (3) of any one of the preceding claims, wherein said at least one actuating element (16, 16') comprises a locking member (20, 20') and said mechanical lock (21, 21') comprises a mechanical lock element (21, 21') provided for snappingly engaging one another when said actuating element (16, 16') is at or past said at least one set limit position.

8. The limiting device (3) of any one of the preceding claims, comprising at least two switches (17, 18), wherein a one of said at least one actuating element (16) is provided for operating said at least two switches (17, 18), wherein said switches (17, 18) and said one actuating element (16) are provided with respect to one another for allowing said one actuating element (16) to operate one switch after the other, in particular leaving previously operated switches operated, and said mechanical lock is provided for engaging said one actuating element (16) for mechanically locking said one actuating element (16) when or after a last one of said at least two switches (17, 18) is operated.

9. The limiting device (3) of claim 8, wherein said one actuating element (16) extends in an extension direction, and said at least two switches (17, 18) are provided along said extension direction, in particular said at least two switches (17, 18) provided at subsequent positions along said extension direction.

10. The limiting device (3) of any one of the preceding claims when depending on claim 5, said joint drive element comprising a threaded spindle (6) and having at least one nut (8, 8') running on said threaded spindle (6), said at least one nut (8, 8') comprising a travel cam (11, 11') and said limiting device comprises a guiding rail (15, 15') for engaging said travel cam (11, 11') for allowing said nut (8, 8') to travel in a longitudinal direction of said threaded spindle (6) on said threaded spindle (6) until an end of said guiding rail (15, 15') where said nut subsequently couples with said threaded spindle (6) to co-rotates with said threaded spindle (6), and an operating cam (12, 12') for engaging said at least one actuating element (16, 16') when said nut (8, 8') co-rotates with said threaded spindle (6).

11. The limiting device (3) of claim 10, wherein said actuating element (16, 16') is positioned for being engaged by said operating cam (12, 12') when said nut (8, 8') is at an end of said threaded spindle (6), in particular said actuating element (16, 16') extends functionally parallel to said threaded spindle (6).

12. The limiting device (3) of claim 10 or 11, wherein said at least one nut (8, 8') further comprises an adjustment part (10, 10') allowing it to be positioned at a start position on said threaded spindle (6), and wherein said start position is at a distance from an end of said spindle (6).

13. The limiting device (3) of any one of the preceding claims, comprising
- at least two sets of said at least one switches (17, 18, and 17', 18'), each set of switches functionally couplable to said motor (2);
- at least two of said actuating elements (16, 16'), driven by the member driven by the motor (2) and each co-acting with a set of said switches, and
- at least two of said mechanical locks (21, 21'), each for engaging a said actuating element (16, 16') for mechanically locking its actuating element (16, 16') when it is at or past its set limit position, thus providing at least two set limit positions.

14. The limiting device (3) of claim 13, wherein each set of switches (17, 18, and 17', 18') comprises at least two switches, wherein each said at least one actuating element (16, 16') is provided for operating a set of switches, wherein said switches of a set of switches and said corresponding actuating element are provided with respect to one another for allowing said actuating element to operate one switch after the other of said set of switches (17, 18, resp. 17', 18'), in particular leaving previously operated switches operated, and each said mechanical lock is provided for engaging a said actuating element (16, 16') for mechanically locking said actuating element (16, 16') when or after a last one of said at least two switches of said set of switches is operated, in particular wherein said actuating element extends in an extension direction, and said at least two switches of said set of switches are provided along said extension direction, in particular said at least two switches of said set of switches provided at subsequent positions along said extension direction.

15. A drive system comprising a motor (2), a transmission (4) functionally coupled to said motor (2), and a limiting device (3) according to any one of the preceding claims, wherein said motor (2) is an electric motor (2).

## Patentansprüche

1. Eine Begrenzungsvorrichtung (3) zur Begrenzung der Bewegung eines von einem Motor (2) angetriebenen Elements, umfassend:
- mindestens einen Schalter (17, 17'), der funktional mit dem Motor (2) koppelbar ist;
- mindestens ein bewegliches Betätigungselement (16, 16'), das von dem vom Motor (2) angetriebenen Element angetrieben wird und mit dem mindestens einen Schalter (17, 18, 17', 18') zusammenwirkt, **dadurch gekennzeichnet, dass** die Vorrichtung ferner umfasst:
- eine mechanische Verriegelung (21) zum Eingriff des mindestens einen Betätigungselements (16, 16') zum mechanischen Verriegeln des mindestens einen Betätigungselements (16, 16') wenn es mindestens eine eingestellte Grenzposition erreicht oder überschritten hat, wobei die mechanische Verriegelung (21) nach dem Einrasten des Betätigungselements (16, 16') eine manuelle Entriegelung der Begrenzungsvorrichtung (3) erfordert.

2. Die Begrenzungsvorrichtung (3) nach Anspruch 1, die ferner ein Gehäuse (5) umfasst das den mindestens einen Schalter (17, 17'), das mindestens eine Betätigungselement (16, 16') und die mechanische Verriegelung (21) aufweist, das Gehäuse (5) weist eine Zugangsöffnung auf die den Zugang zu einem Teil der mechanischen Verriegelung (21) ermöglicht und eine manuelle Entriegelung ermöglicht.

3. Die Begrenzungsvorrichtung (3) nach Anspruch 1 oder 2, wobei die mechanische Verriegelung (21) ein mechanisches Verriegelungselement (21) umfasst, das zum Eingreifen in das mindestens eine Betätigungselement (16, 16') zur Verriegelung vorgesehen ist, insbesondere zum Einschnappen hinter das mindestens eine Betätigungselement (16, 16').

4. Die Begrenzungsvorrichtung (3) nach Anspruch 2, wobei die mechanische Verriegelung (21) ein am Gehäuse (5) befestigtes mechanisches Verriegelungselement (21) umfasst, das in einer Ausführungsform mit zumindest einem Teil des Gehäuses (5) zusammengeformt ist.

5. Die Begrenzungsvorrichtung (3) nach einem der vorhergehenden Ansprüche, wobei das mindestens eine Betätigungselement (16, 16') durch ein gemeinsames Antriebselement (6, 9, 12) bewegbar ist und das mit mindestens einem der beiden Elemente, ausgewählt aus dem Motor (2) und dem von diesem angetriebenen Element, gekoppelt ist.

6. Die Begrenzungsvorrichtung (3) nach einem der vorhergehenden Ansprüche, wobei das mindestens eine Betätigungselement (16, 16') elastisch verformbar ist, insbesondere eine Blattfeder umfasst.

7. Die Begrenzungsvorrichtung (3) nach einem der vorhergehenden Ansprüche, wobei das mindestens eine Betätigungselement (16, 16') ein Verriegelungselement (20, 20') unfasst und die mechanische Verriegelung (21, 21') ein mechanisches Verriegelungselement (21, 21') umfasst die einrastend ineinandergreifen wenn sich das Betätigungselement (16, 16') an oder hinter der mindestens einen eingestellten Grenzposition befindet.

8. Die Begrenzungsvorrichtung (3) nach einem der vorhergehenden Ansprüche, die mindestens zwei Schalter (17, 18) umfasst, wobei eines des mindestens einen Betätigungselements (16) zum Betätigen der mindestens zwei Schalter (17, 18) vorgesehen ist, wobei die Schalter (17, 18) und das eine Betätigungselement (16) so zueinander angeordnet sind, dass das eine Betätigungselement (16) einen Schalter nach dem anderen betätigen kann, insbesondere wobei betätigte Schalter betätigt bleiben, und die mechanische Verriegelung zum Eingreifen des einen Betätigungselements (16) vorgesehen ist zum mechanisch verriegeln des eine Betätigungselement (16) wenn oder nachdem der letzte der mindestens zwei Schalter (17, 18) betätigt wird.

9. Die Begrenzungsvorrichtung (3) nach Anspruch 8, wobei sich das Betätigungselement (16) in Erstreckungsrichtung erstreckt und die mindestens zwei Schalter (17, 18) entlang dieser Erstreckungsrichtung angeordnet sind, insbesondere sind die mindestens zwei Schalter (17, 18) vorgesehen an aufeinanderfolgenden Positionen entlang dieser Erstreckungsrichtung.

10. Die Begrenzungsvorrichtung (3) nach einem der vorhergehenden Ansprüche, sofern diese von Anspruch 5 abhängen, wobei das gemeisame Antriebselement eine Gewindespindel (6) umfasst und mindestens eine auf der Gewindespindel (6) laufende Mutter (8, 8') umfasst, wobei die mindestens eine Mutter (8, 8') einen Laufnocken (11, 11') aufweist und die Begrenzungsvorrichtung eine Führungsschiene (15, 15') umfasst zum Eingriff mit dem Laufnocken (11, 11') um die Bewegung der Mutter (8, 8') in Längsrichtung der Gewindespindel (6) auf dieser bis zu einem Ende der Führungsschiene (15, 15') zu ermöglichen wo die Mutter anschließend kuppelt mit der Gewindespindel (6) und sich mit dieser mitdreht, und die Begrenzungsvorrichtung einen Betätigungsnocken (12, 12') umfasst zum Eingriff mit dem mindestens einen Betätigungselement (16, 16'), wenn sich die Mutter (8, 8') mit der Gewindespindel mitdreht. (6).

11. Die Begrenzungsvorrichtung (3) nach Anspruch 10, wobei das Betätigungselement (16, 16') so positioniert ist dass es von der Betätigungsnocke (12, 12') erfasst wird wenn sich die Mutter (8, 8') am Ende der Gewindespindel (6) befindet, insbesondere wobei sich das Betätigungselement (16, 16') funktional parallel zur Gewindespindel (6) erstreckt.

12. Die Begrenzungsvorrichtung (3) nach Anspruch 10 oder 11, wobei die mindestens eine Mutter (8, 8') ferner ein Einstellteil (10, 10') aufweist das ihre Positionierung in einer Startposition auf der Gewindespindel (6) ermöglicht, wobei diese Startposition einen Abstand zum Ende der Spindel (6) aufweist.

13. Die Begrenzungsvorrichtung (3) nach einem der vorhergehenden Ansprüche, umfassend
- mindestens zwei Sätze mit mindestens diese einen Schalter (17, 18 und 17', 18'), wobei jeder Satz von Schaltern funktionell mit dem Motor (2) koppelbar ist;
- mindestens zwei Betätigungselemente (16, 16') die von dem vom Motor (2) angetriebenen Element angetrieben werden und jeweils mit einem Satz dieser Schalter zusammenwirken, und
- mindestens zwei diesen mechanische Verriegelungen (21, 21'), die jeweils ein dieses Betätigungselements (16, 16') in Eingriff nehmen und zum mechanisch verriegeln wenn es seine eingestellte Endposition erreicht oder überschritten hat, wodurch mindestens zwei Sätzen von eingestellte Endpositionen bereitgestellt werden.

14. Die Begrenzungsvorrichtung (3) nach Anspruch 13, wobei jeder Satz von Schaltern (17, 18 und 17', 18') mindestens zwei Schalter umfasst, wobei jedes diesem mindestens eine Betätigungselement (16, 16') zum Betätigen eines Satzes von Schaltern vorgesehen ist, wobei die Schalter eines Satzes von Schaltern und das entsprechende Betätigungselement in Bezug zueinander so angeordnet sind, dass das Betätigungselement einen Schalter nach dem anderen des Satzes von Schaltern (17, 18 bzw. 17', 18') betätigen kann, insbesondere wobei zuvor betätigte Schalter betätigt bleiben und jede mechanische Verriegelung zum Eingreifen eines dieses Betätigungselements (16, 16') vorgesehen ist um das Betätigungselement (16, 16') mechanisch zu verriegeln wenn oder nachdem ein letzter der mindestens zwei Schalter des Satzes von Schaltern betätigt wird, insbesondere wobei sich das Betätigungselement in einer Erstreckungsrichtung erstreckt und die mindestens zwei Schalter des Satzes von Schaltern entlang dieser Erstreckungsrichtung vorgesehen sind, insbesondere wobei die mindestens zwei Schalter des Satzes von Schaltern an aufeinanderfolgenden Positionen entlang dieser Erstreckungsrichtung vorgesehen sind.

15. Ein Antriebssystem umfassend einem Motor (2), einem mit dem Motor (2) funktional gekoppelten Getriebe (4), und einer Begrenzungsvorrichtung (3) nach einem der vorhergehenden Ansprüche, wobei der Motor (2) ein Elektromotor ist.

## Revendications

1. Dispositif de limitation (3) pour limiter le mouvement d'un élément entraîné par un moteur (2), comprenant :
- au moins un interrupteur (17, 17') fonctionnellement accouplé au moteur (2) ;
- au moins un élément d'actionnement mobile (16, 16'), entraîné par l'élément entraîné par le moteur (2) et coopérant avec l'interrupteur (17, 18, 17', 18'), ledit dispositif comprend en outre :
- un verrou mécanique (21) prévu pour s'engager avec ledit au moins un élément d'actionnement (16, 16') et à verrouiller mécaniquement ledit au moins un élément d'actionnement (16, 16') lorsqu'il atteint ou dépasse une position limite définie, ledit verrou mécanique (21) après s'engager avec l'élément d'actionnement (16, 16') nécessite un déverrouillage manuel du dispositif de limitation (3).

2. Dispositif de limitation (3) selon la revendication 1, comprenant en outre un boîtier (5) contenant ledit au moins un interrupteur (17, 17'), ledit au moins un élément d'actionnement (16, 16') et ledit verrou mécanique (21), ledit boîtier (5) comprenant une ouverture d'accès permettant d'accéder à une partie dudit verrou mécanique (21) pour permettre un déverrouillage manuel.

3. Dispositif de limitation (3) selon la revendication 1 ou 2, dans lequel ledit verrou mécanique (21) comprend un élément de verrouillage mécanique (21) prévu pour s'engager avec ledit au moins un élément d'actionnement (16, 16') pour ledit verrouillage, notamment par encliquetage derrière ledit au moins un élément d'actionnement (16, 16').

4. Dispositif de limitation (3) selon la revendication 2, dans lequel ledit verrou mécanique (21) comprend un élément de verrouillage mécanique (21) fixé audit boîtier (5), dans un mode de réalisation co-formé avec au moins une partie dudit boîtier (5).

5. Dispositif de limitation (3) selon l'une quelconque des revendications précédentes, dans lequel ledit au moins un élément d'actionnement (16, 16') est mobile grâce à un élément d'entraînement commune (6, 9, 12) couplé à au moins un élément choisi parmi ledit moteur (2) et ledit élément entraîné par ledit moteur.

6. Dispositif de limitation (3) selon l'une quelconque des revendications précédentes, dans lequel ledit au moins un élément d'actionnement (16, 16') est déformables élastiquement, en particulier ledit ou lesdits éléments d'actionnement (16, 16') comprennent un ressort à lame.

7. Dispositif de limitation (3) selon l'une quelconque des revendications précédentes, dans lequel ledit au moins un élément d'actionnement (16, 16') comprend un élément de verrouillage (20, 20') et ledit verrou mécanique (21, 21') comprend un élément de verrouillage mécanique (21, 21') prévu pour s'enclencher lorsque ledit élément d'actionnement (16, 16') atteint ou dépasse ladite au moins une position limite définie.

8. Dispositif de limitation (3) selon l'une quelconque des revendications précédentes, comprenant au moins deux interrupteurs (17, 18), dans lequel un de ledit au moins un élément d'actionnement (16) prévu pour actionner lesdits au moins deux interrupteurs (17, 18), dans lequel lesdites interrupteurs (17, 18) et l'élément d'actionnement (16) étant disposés l'un par rapport à l'autre pour permettre à l'élément d'actionnement (16) d'actionner un interrupteur après l'autre, notamment en laissant les interrupteurs précédemment actionnés en fonctionnement, et ledit verrouillage mécanique est prévu pour enclencher l'élément d'actionnement (16) et pour le verrouiller mécaniquement lors ou après l'actionnement du dernier des interrupteurs (17, 18).

9. Dispositif de limitation (3) selon la revendication 8, dans lequel ledit un élément d'actionnement (16) s'étend dans une direction d'extension, et lesdits au moins deux interrupteurs (17, 18) sont disposés le long de ladite direction d'extension, en particulier lesdits au moins deux interrupteurs (17, 18) étant disposés à des positions successives le long de ladite direction d'extension.

10. Dispositif de limitation (3) selon l'une quelconque des revendications précédentes, dépendant de la revendication 5, ledit élément d'entraînement commun comprenant une broche filetée (6) et au moins un écrou (8, 8') s'étendant sur ladite broche filetée (6), ledit au moins un écrou (8, 8') comprend une came de déplacement (11, 11') et ledit dispositif de limitation comprend un rail de guidage (15, 15') destiné à s'engager avec ladite came de déplacement (11, 11') pour permettre à l'écrou (8, 8') de se déplacer dans le sens longitudinal de la broche filetée (6) sur ladite broche filetée (6) jusqu'à l'extrémité dudit rail de guidage (15, 15'), où ledit écrou s'accouple ensuite à la broche filetée (6) pour co-roter avec elle, et une came de commande (12, 12') prévue pour s'engager avec ledit au moins un élément d'actionnement (16, 16') lorsque ledit écrou (8, 8') co-rote avec ladite broche filetée (6).

11. Dispositif de limitation (3) selon la revendication 10, dans lequel ledit au moins un élément d'actionnement (16, 16') est positionné pour être engagé par ladite came de commande (12, 12') lorsque ledit écrou (8, 8') se trouve à une extrémité de ladite broche filetée (6), en particulier ledit au moins un élément d'actionnement (16, 16') s'étend parallèlement à ladite broche filetée (6).

12. Dispositif de limitation (3) selon la revendication 10 ou 11, dans lequel ledit au moins un écrou (8, 8') comprend en outre une pièce de réglage (10, 10') permettant son positionnement dans un position initiale sur ladite broche filetée (6), cette position initiale étant éloignée de l'extrémité de ladite broche (6).

13. Dispositif de limitation (3) selon l'une quelconque des revendications précédentes, comprenant
- au moins deux ensembles d'au moins un interrupteur (17, 18 et 17', 18'), chaque ensemble d'interrupteurs étant fonctionnellement coupable audit moteur (2) ;
- au moins deux de lesdites éléments d'actionnement (16, 16'), entraînés par l'organe entraîné par le moteur (2) et coopérant chacun avec un jeu d'interrupteurs, et
- au moins deux de lesdits verrous mécaniques (21, 21'), chacun destiné à engager un de ledit au moins un élément d'actionnement (16, 16') pour verrouiller mécaniquement son élément d'actionnement (16, 16') lorsqu'il atteint ou dépasse sa position limite définie, offrant ainsi au moins deux positions limites définies.

14. Dispositif de limitation (3) selon la revendication 13, dans lequel chaque ensemble d'interrupteurs (17, 18 et 17', 18') comprend au moins deux interrupteurs, dans lequel chaque de ledit au moins un élément d'actionnement (16, 16') est prévu pour actionner un ensemble d'interrupteurs, dans lequel lesdites interrupteurs d'un ensemble et ledit élément d'actionnement correspondant sont disposés l'un par rapport à l'autre pour permettre à ledit élément d'actionnement d'actionner lesdites interrupteurs de ledit ensemble (17, 18, respectivement 17', 18') les uns après les autres, en laissant notamment les interrupteurs précédemment actionnés, et chaque de ledit verrou mécanique est prévu pour engager un ledit élément d'actionnement (16, 16') afin de verrouiller mécaniquement ledit élément d'actionnement (16, 16') lorsque ou après l'actionnement un dernier de lesdites au moins deux interrupteurs de ledit l'ensemble de interrupteurs, notamment dans lequel ledit élément d'actionnement s'étend dans une direction d'extension. Les deux interrupteurs de l'ensemble sont disposés le long de cette direction d'extension, notamment lesdites au moins deux interrupteurs dudit ensemble d'interrupteurs sont disposés à des positions successives le long de ladite direction d'extension.

15. Système d'entraînement comprenant un moteur (2), une transmission (4) fonctionnellement couplée audit moteur (2) et un dispositif de limitation (3) selon l'une quelconque des revendications précédentes, ledit moteur (2) étant un moteur électrique.
